# EUROPEAN PATENT SPECIFICATION

(11) **EP 4 237 638 B1**
(45) Date of publication and mention of the grant of the patent: **07.01.2026**
(21) Application number: 21799224.7
(22) Date of filing: 22.10.2021
(51) Int. Cl.: E04B 5/10, E04B 5/04, E04B 5/48

(54) **A FLOOR CASSETTE**
BODENKASSETTE
CASSETTE DE PLANCHER

(30) Priority: 30.10.2020 GB 202017247
(43) Date of publication of application: 06.09.2023
(73) Proprietor: De Haan, Ian Robert, Reigate, Surrey RH2 9RE (GB)
(72) Inventor: De Haan, Ian Robert, Reigate, Surrey RH2 9RE (GB)
(74) Representative: Boult Wade Tennant LLP
(86) International application number: PCT/EP2021/079329
(87) International publication number: WO 2022/090076

(56) References cited:
- WO-A1-2015/043310
- WO-A1-98/35113
- CN-A- 103 711 244
- JP-A- H06 306 986
- JP-U- S55 116 112
- US-A- 4 454 695
- US-A1- 2009 188 192
- US-A1- 2009 293 419
- US-A1- 2019 032 332

## Description

The present invention relates to a building comprising a building frame and a floor cassette.

A floor cassette is a panel manufactured in a factory. The panel comprises a set of joists which support an upper layer to form a load bearing element used in floor construction.

Floor cassettes are manufactured in a controlled factory setting which allows the formation of higher quality products than those formed on a building site.

For example, in order to form a concrete floor in a conventional manner, a profiled steel deck is first laid over and attached to the building framework formed of heavy gauge joists. Concrete is then poured over the profiled steel deck with a weld frame inserted into the concrete in order to form the floor structure. The pouring, levelling and setting of the concrete takes place in-situ on a building site environment. This is subject to significant temperature variations and rainfall, which can affect the setting of the concrete. Further, it can also be damaged in the building site environment by people walking on or dropping heavy materials onto the concrete floor during the setting process.

Existing floor cassettes are primarily made of timber and incorporate Posi joists (a combination of timber flanges with a strut steel web) or similar. Such cassettes are reasonably successful. However, they do not provide the same performance as a concrete floor in terms of fire resistance and sound insulation and they do not provide a finished floor surface.

There are also products which appear superficially similar such as those in CN103711244, US1804132, CN109629728 and US2009/0188192 which are whole structural components. In these the units themselves are used to create the building frame in that their joists are load bearing and support the concrete floor. The present invention is concerned with a floor cassette which can be fitted in place to an existing building frame.

We are aware of a product known as Speedfloor USA (licensed from Speedfloor NZ) which provides a concrete floor system in which a rolled joist is embedded into the concrete. The manufacturers suggest that this technology, which is primarily designed for an in-situ installation, could also be used for a floor cassette. However, this is difficult to do in practice. In particular, the embedding of the rolled top of the joist into the concrete is a time consuming process requiring significant skill on behalf of the operator in order to ensure a reliable joint.

The present invention aims at addressing this issues by providing a concrete floor cassette which overcomes these problems.

According to the present invention, there is provided a method according to claim 1.

The present invention is unique in the provision of a floor cassette which comprises a structural component formed of a profiled steel deck on which the concrete is poured. The non-load bearing element is attached on the opposite side of the steel deck. The non-load bearing component is one which does not support the structure of the building. Instead, it is suspended from the steel deck. The non-load bearing component may, for example, provide support for services and/or insulation as discussed below. This contrast with the load bearing elements of the prior art floor systems which support the floor deck and are part of the load bearing structure. The present cassette does not include for the joists to be load bearing or incorporated into the load bearing structure. The present cassette is load bearing on its own without the need for additional support below incorporated into the load bearing structure.

The present invention is therefore based on proven concrete floor technology that uses the proven steel deck profiles and concrete from a well-known flooring technique, as described above.

By importing this technology into a floor cassette, the invention benefits from all of the advantages of the strength and stability of the existing concrete floor technology, but adds the further benefits of being able to create the individual floor cassettes in a controlled factory setting. This avoids any atmospheric problems such as temperature fluctuations, humidity and freezing.

This provides a considerably reduced time and cost on site as compared to conventional methods and systems by being able to be lifted into place as a finished floor system, optionally with some services already installed.The invention therefore provides a concrete floor cassette which provides all of the benefits of a concrete floor including fire resistance and sound proofing whilst avoiding all of the problems of forming a concrete floor, in-situ as set out above.

The openings for the services preferably occupy at least 5%, optionally at least 10% and optionally at least 20% of a cross sectional area in a vertical plane of the cassette below the steel deck.

Thus the cassette can simply be put in place on the building framework and provides a ready-made structure beneath the floor to receive the services and subsequently the ceiling panels.

The profiled steel deck, concrete and non-load bearing element are assembled together in the factory. Other layers may be provided in the factory setting. For example, a weld mesh and/or reinforcing bar may be embedded in the concrete layer. Additional layers may be also provided in the factory setting. For example, the cassette may comprise a layer of sound and/or heat insulating board above the concrete layer. The cassette may further comprises an under floor heating layer on top of the insulating layer.

The cassettes may simply be craned into place as an almost fully formed floor structure, optionally also incorporating underfloor heating, which then simply requires the final flooring layer to be placed on top in-situ.

The non-load bearing element is preferably provided by a plurality of joists, or suspension system, the joists having a beam structure with upper and lower flanges separated by a web, at least 30% of the area of the web being open to allow the services to pass, in use, through the joists.

This also solves the problem of the existing proposal for a concrete floor cassette in that it does not embed the joists into the concrete. Instead, the joists or suspension system are attached on the opposite side of the steel deck. Thus, the pouring of the concrete and the attachment of the joists is far more straightforward than for the above-mentioned Speedfloor.

Significantly, the profiled steel deck and the concrete themselves together form the structural component. The joists are not required to form the structural component. Instead, the open nature of the webs of these joists provides a convenient space below the floor in order to pass essential services including pipework and cabling through this space. The lower faces of the joists provide a well-defined and level surface for the attachment of ceiling panels for the storey below. Service supports may also be incorporated into the joists. These may, for example be ducts or brackets. This allows for easy fitting of the services in situ. Alternatively or additionally, some services (i.e. cabling and/or pipework) may be incorporated into the joists of the cassette in the factory.

As a further possibility, ceiling panels may be fixed to the joists of the cassette in the factory.

The joists or suspension system may, for example, be Posi joists or similar. However, preferably, they are steel joists such as light gauge steel joists which provide the required strength at a lower cost than a Posi joist as they do not need to be not load bearing for the flooring deck. In the broadest sense, at least 30% of the area of the web of the joist is open to allow access for the services. However, preferably, at least 40% and more preferably 50% the area of the web is open as this provides a lighter structure and allows more flexibility for the positioning of services.

Preferably the joists are spaced from longitudinal edges of the structural component that they are parallel to and stop short of transverse edges of the structural component to allow the structural component to be directly supported on all sides from below. This effectively provides a border around the structural component that can be placed on the building frame and be supported directly by the frame.

Preferably the profiled steel deck has a plurality of ridges and the non-load bearing elements run transverse to the ridges. This provides the cassette with enhanced rigidity and helps, for example, to prevent the edges of the deck form lifting in the event of a fire.

As an alternative to or in addition to joists or suspension system, the non-load bearing element may be provided by insulation. In this case the means to retain services may or may not be provided in combination with the insulation. As before, adding the insulation in a factory setting provides significant benefits. The factory setting provides easy access to adhere the insulation in place, as well as providing a well regulated temperature environment for curing the adhesive. This makes it far easier and quicker to install the insulation as well as providing a more reliable joint with improved longevity.

The insulation may be a material such as expanded polystyrene or other suitable material to provide heat insulation and/or a material such as rockwool to provide sound insulation. This can be selectively attached to the steel deck leaving gaps for the services. Alternatively, holes may be made in the insulation for the services before or after it is attached to the steel deck. The insulation is preferably glued or clipped to the steel deck.

With the joists, the framework provided for the services is a generic design as the large openings can accommodate many configurations of ducting. For the insulation, it may be more appropriate to provide a bespoke design. In particular, holes can be formed in the insulation which are specific to the ducting needed for a particular building.

Using conventional building techniques for an insulated ceiling, concrete or steel beams are craned in, concrete is then poured and sets. Insulation can subsequently be attached to the lower surface of the floor decking and ceiling structure. This whole process can take five days and, as above, the concrete is not set in ideal conditions.

The current cassette allows the installation of the insulated concrete to be effectively instantaneous on site as the cassette is simply lowered into place on the frame.

An example of a method in accordance with the present invention will now be described with reference to the accompanying drawings, in which:
Fig. 1 is a perspective view of part of a cassette in which most of the concrete has not been shown for clarity;
Fig. 2 is a schematic partial cross-section through a complete floor incorporating the floor cassette;
Fig. 3 is a perspective view form below and one side showing the cassette of Fig. 1 supported on the building frame;
Fig. 4 is a perspective view form below and the opposite side showing the cassette of Fig. 1 supported on the building frame;
Fig. 5 is a perspective view form below of a second cassette:
   Fig. 6 is a perspective view from above of a third example with no concrete present;
   Fig. 7 is a perspective view from below of a fourth example with no concrete present; and
   Fig. 8 is a perspective view from below of a fifth example with no concrete present.

The floor cassette 1 consists of three main components, namely the joists 2, the profiled steel deck 3 and the concrete 4.

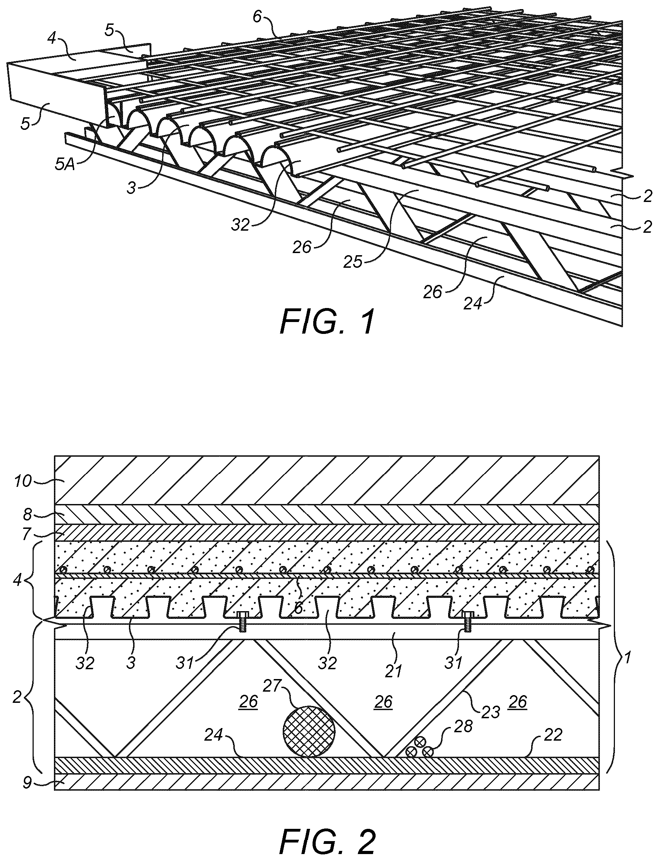

As shown in Fig. 1, a plurality of joists 2 are arranged parallel to one another across the width of the cassette. Only two joists are shown in Fig. 2 for clarity. In practice, the joists 2 will be arranged across the entire cassette 1.

The joists are light steel gauge joists fabricated in a steel profiling machine.

Each joist 2 has an upper flange 21 and a lower flange 22 connected by a web 23. As shown here, the upper 21 and lower 22 flanges have a C-shaped channel section with the side walls 24 and a connecting wall 25. The flange 23 is formed of an undulating strip of steel which may also have a C-shaped profile.

Other forms of light gauge cold form steel joists may be used. They can have any suitable profile to allow the necessary services to be fitted.

Significantly, the web 23 is provided with a number of open areas 25, 26 to allow for services such as pipework 27 and cable bundles 28 (see Fig. 2) to be passed through the floor structure.

The profiled steel deck 3 is placed on top of an array of joists 2 and are connected together by a plurality of bolts 31, self tapping screws or lifting loops.

The profiled steel deck is provided with a number of undulations 32 running transverse to the direction of the joists 2. As shown in Fig. 1, the undulations have a generally dome-like construction, while as shown in Fig. 2 the undulations 32' have a trapezoidal configuration. A number of suitable cross-sections can be used and these are well known in the art as they can be conventional profiled steel deck configurations. Such profiles are currently in use for concrete floors which are formed in-situ and are manufactured under the name MetFloor (RTM). The nature of the profile is selected based on the properties required of the flooring. The profiled steel deck 3 may be formed of a galvanised steel.

The steel deck 3 is surrounded by galvanised steel end plates 5 which are only partly shown in Fig. 1 in a corner of the floor cassette for clarity. Additional end plates 5A run along two sides of profiled steel deck 3 to close off the ends of the channels in the deck 3 to maintain the concrete in place. The profiled steel deck 3 forms the base of the concrete former, while the end plates 5 form the side walls. A weld mesh 6 is fixed above the profiled steel deck 3 whereupon the concrete is poured on to the profiled steel deck 3 filling the space above the profiled steel deck 3 and defined by the end plates 5.

Fig. 1 shows the concrete 4 only in the corner of the cassette which has the end plates. In practice, this would extend fully across the cassette but is omitted in Fig. 1 so that the underlying components are visible.

All of the above operations can be carried out in the carefully controlled environment of a factory such that reliable joints and a good surface finish can be achieved. If required for the application, additional features can be built into the cassette in the factory. For example, the layer of insulating board 7 may be fixed on top of the concrete 4. An underfloor heating layer 8 may optionally be fitted on top of the board 7.

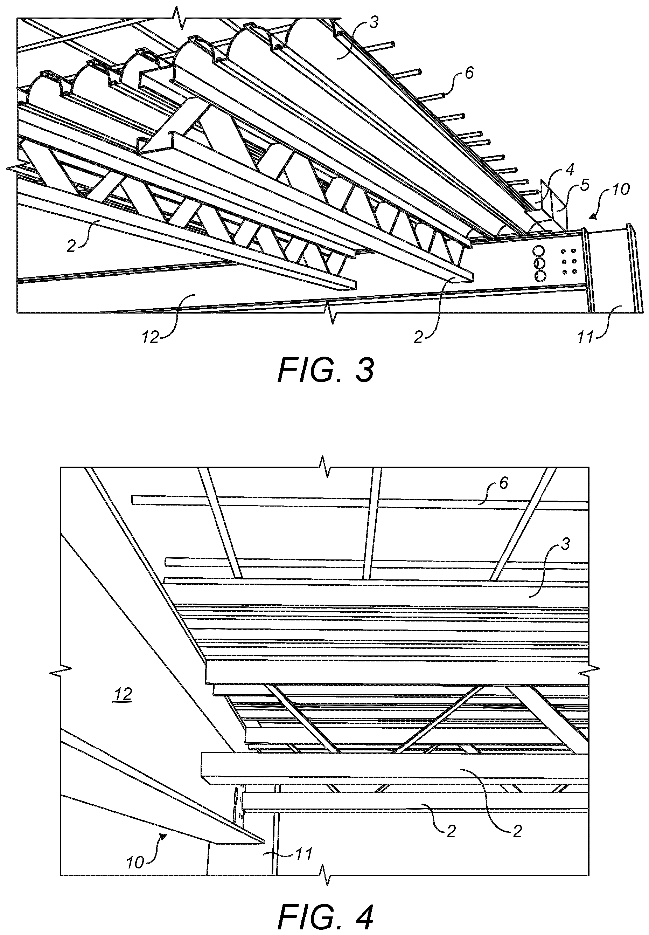

In practice, a building framework 10, as partially shown in Figs. 3 and 4 is erected separately on the building site. This comprises uprights 11 and cross beams 12. This is constructed in a known manner. The framework may be a traditional steel sectional frame. However, it may also be a light gauge steel frame, timber frame or a masonry frame.

Once the floor cassette has been made in this form, it can be transported to the building site using standard transportation systems. Once on site, it can be picked up by a crane and placed in position on the beams 12 of the building framework. As can be seen in Figs. 3 and 4, it is the steel deck 3 and end plates 5 which rest on the cross beams 12. Glue may be used at this interface to prevent lifting and lateral movement of the cassette. The joists are spaced from the cross beams 12 and simply hang down from the steel deck 3. As such, they are not load bearing components.

With reference to Fig. 2, all of the layers from the joists 2 up to the concrete 4, and optionally including the insulating board 7 and heating 8 layers, are part of the preformed cassette. Once installed in this form, the services including pipework 27 and cable bundles 28 are placed through the gaps 26 and supported on the lower flange 24 of the joists 2. Ceiling tiles 9 for the floor below are then attached to the bottom of the joists to conceal the services. The chosen flooring 10 (such as floorboards, tiles or carpet) is then attached installed on the concrete layer 4 or to the additional optional layers 7, 8.

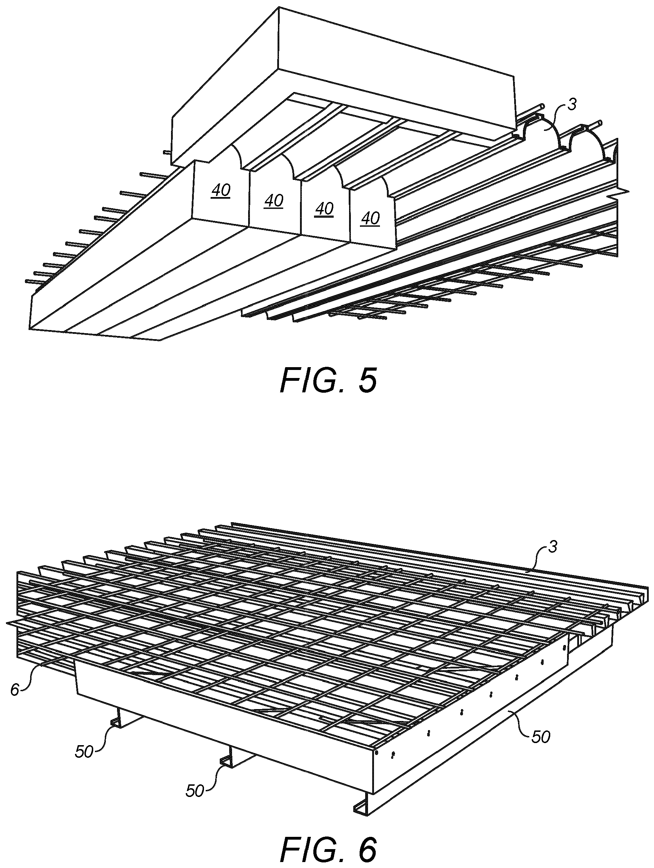

A second example of a floor cassette is shown in Fig. 5. The upper part of the cassette is the same as described above and the same reference numerals have been used to designate the same components.

The only difference is that the joists have been replaced by blocks 40 of expanded polystyrene or urethane to provide heat insulation. They could instead be a different thermal insulator or sound insulator. The blocks 11 are bonded to the deck 3 using an adhesive. Holes (not shown) are made in the insulation to accommodate services which will be run through the insulation.

In this form the cassette is craned into place on the building frame as described above.

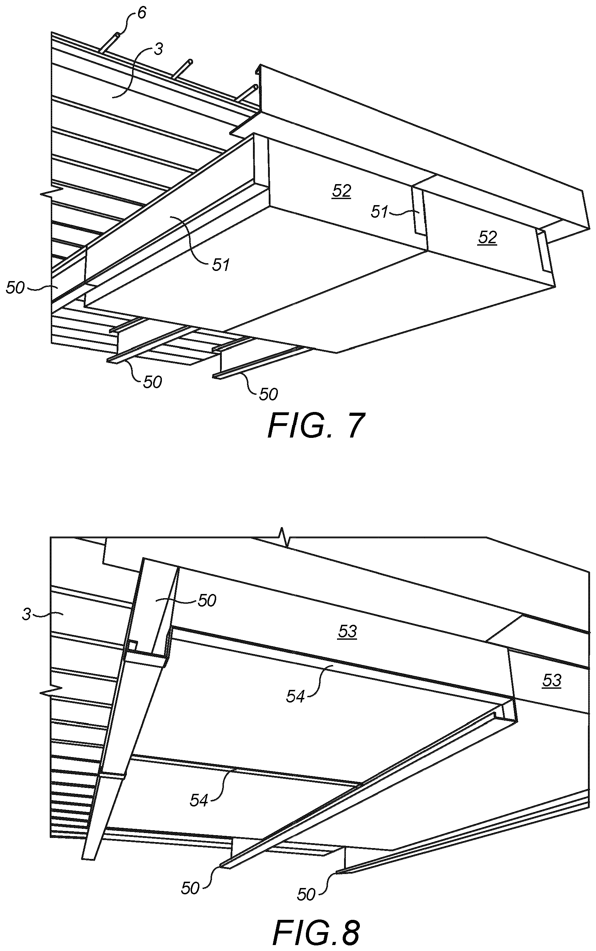

A third example of a floor cassette is shown in Fig. 6. In this case the joists 2 are replaced by C section beams 50. The beams are positioned at right angles to the ridges in the deck 3 but can run in the same direction as the ridges in the deck. The joists in the first example may also be configured in this way. Holes (not shown) are provided to accommodate services. These beams may be present on their own, or may be used to provide a suspension system for the insulation as shown in Figs 7 and 8.

In Fig 7 first insulation blocks 51 are placed in the C section while second, larger blocks 52 fit between adjacent sections. Again, holes are formed for services.

Fig. 8 shows a different arrangement in which only a single type of block 53 is used which fits between adjacent beams 50 and held in place by a plurality of rigid straps 54 which are fitted onto the beams 50. Holes (not shown) are provided to accommodate services. Alternatively and not according to the invention, the lower exposed parts of the beams 50 may provide a channel for the services.

## Claims

1. A method of constructing a building, the method comprising:
forming in a factory a floor cassette (1) comprising a profiled steel deck (3); a layer of set concrete (4) on top of the profiled steel deck; wherein the steel deck and concrete form a self-supporting structural component; and a non-load bearing element (2, 40) attached to the opposite side of the steel deck (3) from the concrete,
wherein the cassette (1) further comprises means (25, 26) to retain services on the non-load bearing element;
wherein the means to retain services on the non-load bearing element is in the form of openings (25, 26) through the non-load bearing element (2);
transporting the cassette to a building site;
building a building frame on the building site;
installing the cassette on a building frame such that the structural component is supported on the building frame with the non-load bearing element (2, 40) not being directly supported by the frame;
running pipework and/or cabling (27, 28) through the openings; and
installing flooring above the concrete layer.

2. A method according to claim 1, wherein a weld mesh (6) is embedded in the concrete layer (4).

3. A method according to any preceding claim, the cassette further comprises a layer of insulating board (7) above the concrete layer (4).

4. A method according to claim 3, further comprises an under floor heating layer (8) on top of the insulating board layer (7).

5. A method according to any preceding claim, wherein the non-load bearing element is provided by a plurality of joists (2), the joists having a beam structure with upper and lower flanges separated by a web, at least 30% of the area of the web being open to allow the services to pass, in use, through the joists.

6. A method according to claim 5, further comprising attaching ceiling panels (9) to the lower flange (2) of the joists.

7. A method according to any of claims 5 to 6, wherein the joists (2) are steel joists.

8. A method according to any of claims 5 to 7, wherein the joists (2) are spaced from longitudinal edges of the structural component that they are parallel to and stop short of the transverse edges of the structural component to allow the structural component to be directly supported on all sides from below.

9. A method according to any preceding claim, wherein the non-load bearing element is provided by insulation (40).

## Patentansprüche

1. Verfahren zum Errichten eines Gebäudes, wobei das Verfahren umfasst:
in einer Fabrik Herstellen einer Bodenkassette (1), die eine profilierte Stahlplatte (3), eine Schicht aus abgebundenem Beton (4) auf der profilierten Stahlplatte, wobei die Stahlplatte und der Beton ein selbsttragendes Bauteil bilden, und ein nichttragendes Element (2, 40)umfasst, das an der dem Beton gegenüberliegenden Seite der Stahlplatte (3) befestigt ist,
wobei die Kassette (1) ferner Mittel (25, 26) zum Halten von Versorgungsleitungen an dem nichttragenden Element umfasst;
wobei die Mittel zum Halten von Versorgungsleitungen an dem nichttragenden Element in Form von Öffnungen (25, 26) durch das nichttragende Element (2) ausgebildet sind;
Transportieren der Kassette zu einer Baustelle;
Errichten eines Gebäudegerüsts auf der Baustelle;
Installieren der Kassette an einem Gebäudegerüst, so dass das Bauteil auf dem Gebäudegerüst abgestützt ist, wobei das nichttragende Element (2, 40) nicht direkt vom Gerüst abgestützt ist;
Verlegen von Rohrleitungen und/oder Kabeln (27, 28) durch die Öffnungen; und
Verlegen eines Bodenbelags über der Betonschicht.

2. Verfahren nach Anspruch 1, bei dem ein Schweißgitter (6) in die Betonschicht (4) eingebettet ist.

3. Verfahren nach einem der vorstehenden Ansprüche, bei dem die Kassette ferner eine Dämmplattenschicht (7) über der Betonschicht (4) umfasst.

4. Verfahren nach Anspruch 3, das ferner eine Fußbodenheizungsschicht (8) auf der Dämmplattenschicht (7) umfasst.

5. Verfahren nach einem der vorstehenden Ansprüche, bei dem das nichttragende Element durch eine Mehrzahl von Unterzügen (2) gebildet wird, wobei die Unterzüge eine Balkenstruktur mit oberen und unteren Flanschen aufweisen, die durch einen Steg voneinander getrennt sind, wobei mindestens 30 % der Fläche des Stegs offen sind, damit die Versorgungsleitungen im Gebrauch durch die Unterzüge hindurchgeführt werden können.

6. Verfahren nach Anspruch 5, das ferner das Anbringen von Deckenplatten (9) an dem unteren Flansch (2) der Unterzüge umfasst.

7. Verfahren nach einem der Ansprüche 5 bis 6, bei dem die Unterzüge (2) Stahlunterzüge sind.

8. Verfahren nach einem der Ansprüche 5 bis 7, bei dem die Unterzüge (2) von Längskanten des Bauteils, zu denen sie parallel verlaufen, beabstandet sind und vor den Querkanten des Bauteils enden, so dass das Bauteil an allen Seiten direkt von unten abgestützt werden kann.

9. Verfahren nach einem der vorstehenden Ansprüche, bei dem das nichttragende Element durch eine Isolierung (40) gebildet wird.

## Revendications

1. Procédé de construction d'un bâtiment, le procédé comportant :
la formation en usine d'une cassette de plancher (1) comportant un tablier en acier profilé (3) ; d'une couche de béton durci (4) au-dessus du tablier en acier profilé ; dans lequel le tablier en acier et le béton forment un composant de structure autoportant ; et d'un élément non porteur (2, 40) fixé au côté opposé du tablier en acier (3) à partir du béton,
dans lequel la cassette (1) comporte en outre des moyens (25, 26) de retenue d'équipement technique sur l'élément non porteur ;
dans lequel les moyens de retenue d'équipement technique sur l'élément non porteur se présentent sous la forme d'ouvertures (25, 26) à travers l'élément non porteur (2) ;
le transport de la cassette vers un chantier ;
la construction d'une charpente de bâtiment sur le chantier ;
l'installation de la cassette sur une charpente de bâtiment de sorte que le composant de structure soit supporté sur la charpente de bâtiment, l'élément non porteur (2, 40) n'étant pas directement supporté par la charpente ;
le passage d'une tuyauterie et/ou d'un câblage (27, 28) à travers les ouvertures ; et
la pose d'un revêtement de sol au-dessus de la couche de béton.

2. Procédé selon la revendication 1, dans lequel un treillis soudé (6) est noyé dans la couche de béton (4).

3. Procédé selon une quelconque revendication précédente, la cassette comportant en outre une couche de panneau isolant (7) au-dessus de la couche de béton (4).

4. Procédé selon la revendication 3, comportant en outre une couche de chauffage par le sol (8) au-dessus de la couche de panneau isolant (7).

5. Procédé selon une quelconque revendication précédente, dans lequel l'élément non porteur est formé par une pluralité de solives (2), les solives présentant une structure de poutre avec des ailes supérieure et inférieure séparées par une âme, au moins 30 % de la surface de l'âme étant ouverte pour permettre le passage de l'équipement technique, lors de l'utilisation, à travers les solives.

6. Procédé selon la revendication 5, comportant en outre la fixation de panneaux de plafond (9) à l'aile inférieure (2) des solives.

7. Procédé selon l'une quelconque des revendications 5 à 6, dans lequel les solives (2) sont des solives en acier.

8. Procédé selon l'une quelconque des revendications 5 à 7, dans lequel les solives (2) sont espacées des bords longitudinaux du composant de structure auxquels elles sont parallèles et s'arrêtent juste avant les bords transversaux du composant de structure pour permettre au composant de structure d'être directement supporté sur tous les côtés par le bas.

9. Procédé selon une quelconque revendication précédente, dans lequel l'élément non porteur est formé par un isolant (40).
